# EUROPEAN PATENT APPLICATION

(11) **EP 4 340 411 A1**
(43) Date of publication of application: **20.03.2024**
(21) Application number: 23169029.8
(22) Date of filing: 20.04.2023
(51) Int. Cl.: H04W 4/90, H04W 24/08

(54) **SYSTEM FOR MONITORING THE OPERATING STATE OF THE EMERGENCY CALL SERVICE INTO TUNNELS**

(30) Priority: 19.09.2022 IT 202200019122
(71) Applicant: Cellnex Italia S.p.A, 00148 Roma (RM) (IT)
(72) Inventor: TENAGLIA, Emilio, 00148 Roma (RM) (IT); ZEI, Gherardo, 00148 Roma (RM) (IT)
(74) Representative: Concone, Emanuele

(57) **Abstract**

The present invention relates to a system for monitoring mobile radio systems for detecting the operating state of the emergency call service into, in particular motorway, tunnels.

## Description

The present invention relates to a system for monitoring the mobile radio systems for detecting the operating state of the emergency call service into, in particular motorway, tunnels.

### Background

With Regulation UE 2015/758 of the European Parliament and of the Council of 29 April 2015 (concerning type-approval requirements for the deployment of the eCall in-vehicle system based on the 112 service and amending Directive 2007/46/CE), the European Parliament made compulsory starting from 31 March 2018 to instal the device enabled for (e-call) emergency call service on board the newly registered vehicles, wherever they are. Since currently there are still many vehicles not equipped with such device, it is fundamental for drivers' safety to guarantee the availability of the emergency call service through the user's mobile phone by at least a telecommunication operator, even in areas where the mobile radio coverage could be limited or even absent, as in case of tunnels. To this purpose, it is considered to be necessary to be able to perform monitoring of the state of the emergency call service offered by one or more telecommunication operators into the several tunnels present along the motorway networks.

The emergency call, made from one's own mobile phone, is a fundamental service for a driver into the tunnel in an emergency situation, such as for example under conditions of broken-down motor vehicle or driver's health problems.

The emergency call is defined as a phone call made to one single emergency number (for example 112 in Europe, 911 in USA).

It can be made on condition that the following properties result to be checked:
1. UE (User Equipment) enabled for Emergency Calls (also called "not locked")
2. UE registered with a cell of the serving operator (in the "IDLE" mode the strength measurements are received by the radio-base station)
3. UE with SIM/USIM card from a different operator (in this case the UE does not register on the network but it makes directly the emergency call through the network of the present operator)
4. UE without SIM/USIM card (the UE does not register on the network but it makes directly the emergency call through the network of the present operator).

### Object of the invention

The present invention aims at defining the architecture of a system for monitoring the, manual and/or automatic, emergency call service, between a motor vehicle stopped in tunnel and the telephone operator service platform, by avoiding the vehicle abandonment and by guaranteeing that the maximum standard levels of both physical and computer science performance and safety be met.

Such aim is reached by a system of probes as defined in claim 1 and then a system using them as defined in claim 5.

The present invention further relates to a method for monitoring the status of the emergency call service as defined in claim 7.

Additional features of the present invention are defined in the corresponding depending claims.

The advantages, together with the features and the use modes of the present invention, will result evident from the following detailed description of preferred embodiments thereof, shown by way of example and not with limitative purposes.

### Brief description of figures

Hereinafter in this description the drawings shown in the enclosed figures will be referred to, wherein:
- Figure 1 shows schematically the general architecture of a system according to the present invention;
- Figure 2 shows schematically one of the SO probes according to the present invention.

### Detailed description of the invention

The present invention will be described hereinafter by making reference to the above-mentioned figures.

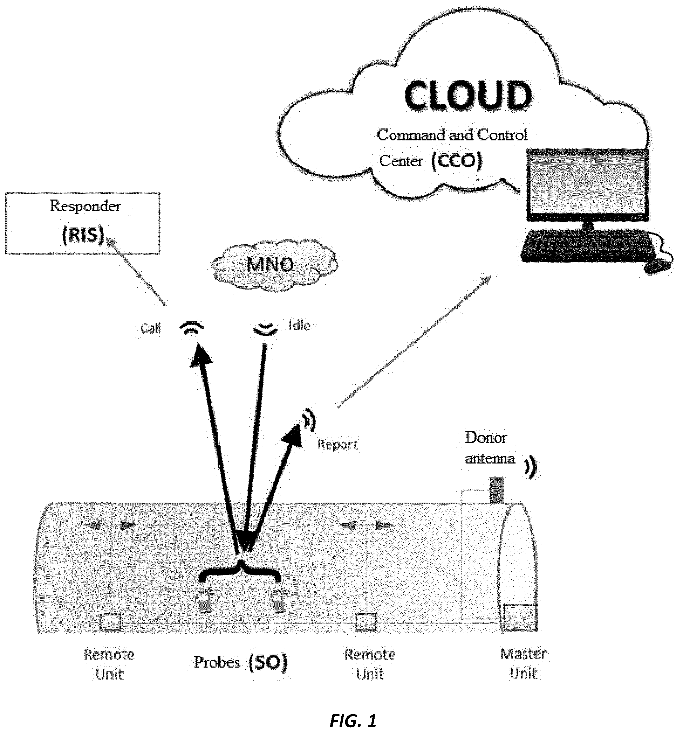

Figure 1 shows schematically the general architecture of a system according to the present invention.

One of the key elements of the present invention consists of a probe SO. Such probe is a device for monitoring the cellular radio coverage and programmable automatic call, for simulating the behaviour of the mobile network users and generation of reports relating to the correct operation of the mobile radio network in the installation area. It is a device which proposes to monitor coverage quality and intensity and even to check the successful establishment of phone calls; therefore, it is suitable in the situations in which it is necessary to check the presence of phone coverage for safety and emergency reasons (for example, in the road sector into tunnels, in underground car parks and under all similar conditions where it is necessary to be able to contact possible emergency numbers).

A probe SO according to the present invention comprises a programmable microprocessor device, for example a Raspberry^{©} device or similar and however functionally equivalent devices, a power supply section and a backup battery, and one or more modems, each one equipped with a SIM card from one of the telephone operators which provide the service in the system use area.

The probes SO are intended to be installed in tunnel, then under even difficult environmental conditions. For this reason, each probe is preferably contained in a container made of stainless steel implemented to guarantee IP54 environmental protection degree and IK10 mechanical protection.

The device is devised to operate at the maximum operativity, in an operating temperature range comprised between -20°C. and +50°C and it has, for example, compact sizes for an easy positioning, preferably 400 mm x D 200 mm x W 300 mm, or even smaller sizes.

As even illustrated in figure 1, it is assumed that one or more telecommunication operators have installed systems for repeating signals of their mobile radio system into a tunnel arch. The devices associated to such systems are generally designated as Remote Unit RU in the diagram of Figure 1 and they are not part of the present invention.

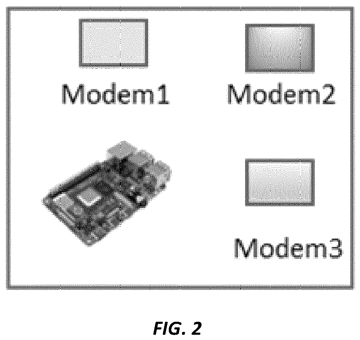

The monitoring system object of this patent is assembled into the arches of a tunnel. It provides the installation of one or more probes SO which are positioned into the tunnel. Figure 2 schematizes a probe SO.

The single SO comprises transceiver devices (modems) required:
a. to make measurements of the strength of the signal received by RUs belonging to the repeater system of the mobile radio operator present into the tunnel;
b. to forward calls to other probes into the same tunnel (in case of single-arched tunnels) and/or, in case of two-arched tunnels, to the probes present in the other arch
c. to forward calls to automatic responders RIS
d. to send data to a command and control center CCO of the monitoring system by the data link established with at least one of the mobile telephone operators present into the tunnel.

The calls to other probes that is to the command and control center CCO are made by using the mobile radio signal repeater systems installed into the tunnels. The modems inside the probes are capable of forwarding calls by using different mobile radio access technologies, such as 2G, 3G, 4G, 5G, etc.

The single SO registers the results of the measurements of received strength and of the calls forwarded to the other probes and it communicates such results to the command and control center CCO.

As shown in Figure 1, the system can include one or more automatic responders RIS which can be queried by the SOs by calls vehiculated through one or more networks of the mobile radio operators the systems thereof are installed into the tunnel. The use of the responders within the operating procedures of the subject system will be illustrated hereinafter in the present document.

The single probe, and in case the responder RIS, send by data link the information acquired into the tunnel towards the operating control center CCO for the subsequent processing aimed at determining the (active or not active) operating state of the emergency call service into the tunnel. The command and control center CCO for example can be installed inside a data center.

The command and control center CCO collects information about:
- System self-diagnosis alarms (DAS (Distributed Antenna System), probes, responders)
- Functionality for checking the emergency call:
   - (IDLE) Status of the main operators for 2G, 3G and 4G
   - Emergency call status
   - System status for each arch.

By processing the received data, the IT platform implementing CCO is capable of:
a. Determining the presence of one or more mobile network operators M NO into the tunnel and with reference to the used single communication technologies such as for example 2G, 3G and 4G;
b. the operating state of the (IDLE or CONNECTED) probes installed into the tunnel arches
c. Determining the (OPERATING or NOT OPERATING) state of the emergency call service offered by one or more of the mobile radio operators present into the tunnel;
d. Providing diagnostics information about the operating state of the monitoring system, the present patent relates to. Such information is provided at the level of the single arch and tunnel.

The functionalities and algorithms used for achieving the objectives of the preceding points a-c are illustrated hereinafter.
a. By using the modems of Figure 2, the single SO first of all performs measurements of the strength level of the radio signal present into the tunnel; the measurement is performed:
   - For each operator
   - For each communication technology
b. By using the modems in Figure 2, the single SO makes a call to another SO present in the same tunnel (arch) that is in the other arch in case of double-arched tunnel.

Each probe makes Nr. K (with K ≥ 1) call attempts by using the installed modems, one for each one of the N (with N ≥ 1) mobile radio operators present into the tunnel. If all N*K call attempts fail, the probe makes Nr. L (with L ≥ 1) call attempts to RIS. If also these L attempts fail, a fault is detected, with possibility of rebooting the same probe.

Thanks to the connection with the telephone operator, the probe stores locally, for example on a JSON file, the collected data and sends them to the web platform, after having checked the presence of Internet connection. In fact, every T seconds, the probe sends a header request to an Internet server. The connection preferably takes place through HTTP protocol after having exchanged a safety token of BEARER TOKEN, standard OAUTH2 type. The transmission then takes place with encrypted tunnel.

Even the configuration on each probe is performed remotely, thanks to the remote connection with Secure SHell (SSH) protocol and to Secure Copy (SCP) command.

The IT platform which implements CCO provides at least the following information:
System self-diagnosis alarms for each component which divide into:
- DAS alarms
- Probe alarms
- Responder alarms
- Status of the emergency call showing the possibility of the emergency call in the whole tunnel
- System status for each arch
- System status for each tunnel
- (Idle) Probe status.

The SOs installed into the tunnel implement the following operating procedures required for the operation of the system itself. They are grouped by processes which are performed within the single SO:

### Process for monitoring coverage checking measurements:

a. It is responsible for loading the SO configuration.
b. It performs the measurements for checking the radio coverage by measuring the strength received for each single modem. To this purpose, the probe uses the modems inside thereof to measure the radio signal in IDLE status and it stores locally the collected data, for example, on a file.

### Process for monitoring call tests

c. The SO makes the calls to other probes.

To this purpose the single SO:
- Selects one or more communication technologies made available by that operator
- By using the selected technology, it makes the call attempts (Nr. K for each one of the N modems) to another SO. If all Nr. K attempts fail, an algorithm of Recovery 1 is launched.

### Algorithm of Recovery 1:

a. The probe makes the call to the RIS (if present) by using the modem associated to the MNO by using the selected communication technology (see above).
b. In case of negative response to the call to RIS, another modem is selected (of another MNO with the same or other communication technology, and the call to RIS is repeated.
c. If no call to RIS is successful, the reset of the modems is performed and the procedures of preceding points a, b, are repeated
d. After having reset the modems:
   - The recovery is successful if one succeeds in making at least one call to RIS, by using any one of the modems and any one of the available technologies. In this case the fact that the recovery was successful is registered
   - The recovery is not successful if one does not succeed in any way in contacting the RIS. In this case: one can activate the SO forced reboot, that is one can store only that the recovery was not successful (false recovery)

### Process for Controlling alarms inside SO.

The SO checks periodically the operating state of the modems installed inside the SO itself and it checks the relative configuration (including date and time).

The SO checks periodically the operating state of the internal hardware.

In case one of the two checks is negative, a hardware failure can be declared which could require a local intervention of the system operator.

The check for operation of the internal hardware and of the modems inside the SO can be launched even after the negative result of the algorithm of recovery 1 (described previously) in which one does not succeed in any way in establishing the call to RIS. Even in this case, if the hardware check has a negative result, it could be necessary a local intervention of the system operator.

The present invention has been sofar described with reference to preferred embodiments thereof. It is to be meant that each one of the technical solutions implemented in the preferred embodiments, herein described by way of example, can advantageously be combined, differently from what described, with the other ones, to create additional embodiments, belonging to the same inventive core and however all within the protective scope of the herebelow reported claims.

## Claims

1. A device (SO) for monitoring cellular radio coverage in a tunnel served by at least one mobile telephone operator, comprising:
- a programmable microprocessor device;
- a power supply section and a backup battery;
- one or more modems, each one equipped with a SIM card from a different telephone operator,
wherein said microprocessor device is programmed so as to perform the following operations of:
a. making measurements of the signal strength received from the mobile radio operator's repeater system present into the tunnel;
b. forwarding calls to other probes;
c. forwarding calls to automatic responders (RIS);
d. sending data to a remote command and control center (CCO).

2. The device according to claim 1, wherein said microprocessor is programmed:
- to make a number K (with K ≥ 1) of call attempts by using the installed modems, one for each one of the N (with N ≥ 1) mobile radio operators present into the tunnel;
- if all N*K call attempts fail, to make a number L (with L ≥ 1) call attempts to an automatic responder (RIS);
- if said L call attempts to the automatic responder also fail, a fault is detected.

3. The device according to claim 1 or 2, wherein said microprocessor is a Raspberry^{©} device, or a functionally equivalent device.

4. The device according to any one of the preceding claims, assembled in a stainless-steel enclosure implemented to guarantee IP54 environmental protection degree and IK10 mechanical protection.

5. A system for monitoring the cellular radio coverage in a tunnel served by at least one mobile telephone operator comprising:
- one or more devices (SO) according to one of claims 1 to 4 which can be installed in said tunnel;
- a command and control center (CCO) configured to receive data from said devices (SO) and determine an operating state of the emergency call service into said tunnel.

6. The system according to claim 5, further comprising one or more automatic responders (RIS) configured to receive calls from said devices (SO).

7. A method for monitoring cellular radio coverage in a tunnel served by at least one mobile telephone operator, comprising the steps of:
- providing one or more devices (SO) according to one of claims 1 to 4;
- making through one of said devices (SO) a number K (with K ≥ 1) of call attempts, one for each one of the N (with N ≥ 1) mobile radio operators present into the tunnel;
- if all N*K call attempts fail, making a number L (with L ≥ 1) of call attempts to an automatic responder (RIS);
- if L call attempts to the automatic responder also fail, a fault is detected.
